# EUROPÄISCHE PATENTSCHRIFT

(11) **EP 2 473 303 B1**
(45) Veröffentlichungstag und Bekanntmachung des Hinweises auf die Patenterteilung: **16.09.2015**
(21) Anmeldenummer: 10745655.0
(22) Anmeldetag: 27.08.2010
(51) Int. Cl.: B23B 51/04

(54) **KERNBOHRMASCHINE MIT AUSTAUSCHBARER BOHRKRONE**
CORE DRILL HAVING AN INTERCHANGEABLE CORE BIT
CAROTTIÈRE À COURONNE DE FORAGE ÉCHANGEABLE

(30) Priorität: 02.09.2009 DE 102009040513
(43) Veröffentlichungstag der Anmeldung: 11.07.2012
(73) Patentinhaber: C. & E. Fein GmbH, 73529 Schwäbisch Gmünd-Bargau (DE)
(72) Erfinder: RICHT, Boris, 71282 Hemmingen (DE); STARK, Christian, 72108 Rottenburg-Hemmendorf (DE); GARIFO, Nicasio, 72555 Metzingen (DE)
(74) Vertreter: Witte, Weller & Partner Patentanwälte mbB
(86) Internationale Anmeldenummer: PCT/EP2010/062542
(87) Internationale Veröffentlichungsnummer: WO 2011/026787

(56) Entgegenhaltungen:
- DE-A1- 2 409 017
- DE-A1- 4 141 045
- DE-C1- 19 717 031
- JP-A- 58 010 416
- US-A1- 2009 044 674

## Beschreibung

Die vorliegende Erfindung betrifft eine Kernbohrmaschine sowie eine Bohrkrone und einen Zentrierbohrer, die zum Einstecken in die Kernbohrmaschine geeignet sind.

Kernbohren ist allgemein bekannt. Kernbohren hat den Vorteil, dass nur ein Ringspalt zerspant werden muss, nicht jedoch der gesamte Bohrungsquerschnitt.

Verschiedene Hersteller bieten konventionelle Kernbohrmaschinen für Gestein an, die von Hand geführt werden können oder die an spezielle Stative (Bohrständer) angebracht werden.

Das Kernbohren wird auch für Bohrungen in metallischen Werkstoffen verwendet. Hier sind jedoch nur Kernbohrmaschinen bekannt, die in Bohrständern montiert sind, die wiederum durch Magnetkraft oder Unterdruck gegenüber dem zu bearbeitenden Werkstück gesichert sind. Dazu werden Bohrkronen eingesetzt, die zum Beispiel einen vorn angespitzten Zentrierstift zum Positionieren der Kernbohrmaschine auf dem Werkstück aufweisen.

Zum Zentrieren der Bohrkrone werden im Stand der Technik entweder Zentrierdorne oder Zentrierbohrer verwendet. Zentrierdorne bzw. -bohrer können auch gleichzeitig als Auswerfer für Bohrkerne benutzt werden.

Eine Befestigung der Bohrkronen an herkömmlichen Spindeln erfolgt durch zahlreiche verschiedene Lösungen, die im Stand der Technik bekannt sind.

Im Unterschied zu einem Bohren mit Bohrständern kann eine Bohrung beim handgeführten Bohren in eine Richtung "weglaufen" bzw. "verlaufen". Zentrierdorne, wie sie beim stativgeführten Bohren eingesetzt werden, können dies bei einer handgeführten Bohrung nicht zuverlässig verhindern. Beim handgeführten Kernbohren müssen also Zentrierbohrer eingesetzt werden. Hierbei ist es von Nachteil, dass bekannte Zentrierbohrer das gesamte Werkstück durchbohren. Es wäre vorteilhaft, Zentrierbohrer nur so tief in das Werkstück bohren zu lassen, bis sicher gewährleistet ist, dass die Bohrung nicht "weglaufen" kann.

Ferner gibt es im Stand der Technik Zentrierbohrer, die manuell in eine ausgefahrene oder eingezogene Stellung gebracht werden können. Auf diese Weise erfolgt eine Bohrung in zwei Schritten. In einem ersten Schritt wird mit dem Zentrierbohrer ein Pilotloch gebohrt. Anschließend wird der Zentrierbohrer manuell eingerückt oder eine Drehmitnahme deaktiviert. In einem zweiten Schritt wird das Kernloch fertig gebohrt. Dieses Verfahren ist zeitaufwändig und provoziert Fehlbediengungen, da Benutzer aus Bequemlichkeit den gesamten Bohrvorgang mit einem aktiven Zentrierbohrer durchführen, um den Bohrvorgang nicht unterbrechen zu müssen.

In dem europäischen Patent EP 0 873 831 B1 wird eine Kembohrmaschine offenbart, bei der der Zentrierbohrer ohne Unterbrechung des Bohrvorgangs zunächst ein Pilotloch bohrt und dann aus einem, den Zentrierbohrer antreibenden Formschluss, entriegelt wird, so dass nur noch die Bohrkrone gedreht wird. Die Entriegelung erfolgt dabei selbsttätig unter Überwindung eines vorbestimmten Anpressdruckes, der manuell auf die Bohrmaschine ausgeübt werden muss. Sobald eine Bedienperson feststellt, dass ein Pilotloch hergestellt ist, erhöht sie den Anpressdruck und schaltet dadurch den Zentrierbohrer wirkungslos.

Bei dieser Bohrmaschine besteht die Gefahr, dass die Bedienperson den Anpressdruck zu früh erhöht und damit den Zentrierbohrer vorzeitig deaktiviert. In diesem Fall ist das Pilotloch noch nicht ausreichend tief, um ein "Weglaufen" zu verhindern.

Die DE 38 07 225 A1 offenbart einen Halter für ein Bohrwerkzeug. Die JP 08-336713 A offenbart einen Kernbohrer.

Das Dokument DE 41 41 045 A1 kann als nächstliegender Stand der Technik angesehen werden und zeigt eine Kernbohrmaschine bei der Zentreibohrer in axialer Richtung freigegeben wird, wenn sich die Bohrkrone relativ zur Antriebswelle verdreht. Das Dokument JP 58-010416 A zeigt eine Bohrkrone. Das Dokument DE 24 09 017 A1 zeigt einen Zentrierbohrer.

Angesichts dieser Sachlage ist es eine Aufgabe der Erfindung, eine Maschine zum Kernbohren von bevorzugt Metallwerkstoffen bereitzustellen, die eine gute Zentrierung der vorzugsweise handgeführten Bohrung gewährleistet, ohne unnötig viel Material zu zerspanen. Der Bohrvorgang soll insbesondere ohne potentielle Fehlbedienungen durchgeführt werden können, das heißt die Bedienperson soll den Bohrvorgang nicht wegen eines manuellen Eingriffs unterbrechen müssen oder den Anpressdruck kurzzeitig erhöhen müssen. Vorzugsweise soll die Kernbohrmaschine nach einer Fertigstellung der Bohrung ohne manuelles Angreifen sofort und automatisch wieder für eine nächste Bohrung zur Verfügung stehen.

Diese Aufgabe wird mit einer Kernbohrmaschine gelöst, die folgende Komponenten aufweist: eine sich axial erstreckende Hohlbohrwelle, die drehbar in einem Gehäuse der Kernbohrmaschine gelagert ist und die mit einer Antriebseinheit in Rotation versetzt werden kann; eine koaxiale Werkzeugaufnahme zur Aufnahme einer axial verschieblich lagerbaren Bohrkrone, wobei die Werkzeugaufnahme einen Verriegelungsmechanismus aufweist, der die Bohrkrone, wenn sie in die Werkzeugaufnahme eingesteckt ist, in einer radialen Richtung gegen ein axiales Herausfallen sichert, wobei der Verriegelungsmechanismus die Bohrkrone drehfest mit der Hohlbohrwelle verbindet und eine begrenzte axiale Bewegung der Bohrkrone relativ zur Hohlbohrwelle ermöglicht; wobei die Hohlbohrwelle geeignet ist, in ihrem Inneren vorn einen Schaft eines austauschbaren Zentrierbohrers, vorzugsweise formschlüssig, aufzunehmen, wobei der Zentrierbohrer drehfest mit der Hohlbohrwelle koppelbar ist, sich axial begrenzbar in der Hohlwelle bewegen kann und sich axial gegen ein erstes Federelement abstützt; und ein axiales Anschlagselement für den Zentrierbohrer, das in einer ersten Stellung eine vollständige Verschiebung des Zentrierbohrers in das Innere der Hohlbohrwelle verhindert und das in einer zweiten Stellung eine vollständige Verschiebung des Zentrierbohrers in das Innere der Hohlbohrwelle zulässt; und eine Aktivierungseinrichtung zur Aktivierung der ersten oder der zweiten Stellung des Anschlagelements in Abhängigkeit von einer axialen Position der Bohrkrone relativ zur Hohlbohrwelle.

In einem zusammengebauten Zustand ist sowohl der Zentrierbohrer als auch die Bohrkrone relativ zur Bohrwelle axial verschieblich gelagert. Während einer ersten Bohrphase stößt der Zentrierbohrer gegen ein Anschlagselement, das ein tieferes Eintauchen des Zentrierbohrers in das Innere der Hohlbohrwelle vorerst verhindert. So lässt sich zumindest ein erster Teil des Pilotlochs bohren.

Bei fortgesetzter kontinuierlicher Vorwärtsbewegung der gesamten Bohrmaschine stößt die Bohrkrone dann an das zu bearbeitende Werkstück an und wird dadurch nach hinten geschoben, wodurch ein Mechanismus ausgelöst wird, der das Anschlagselement freigibt, welches ein tieferes Eindringen des Zentrierbohrers verhindert hat. Sobald der Weg für den Zentrierbohrer frei ist, kann der Zentrierbohrer der Vorwärtsbewegung der Bohrmaschine ausweichen, so dass allein die Bohrkrone tiefer in das zu bearbeitende Werkstück eingeführt wird.

Sobald die Bohrkrone das Werkstück durchdrungen hat, ist der Bohrkern lose und wird mit Hilfe des Zentrierbohrers, der im Inneren der Kernbohrmaschine mit einer Feder axial vorgespannt ist, aus der Bohrkrone herausgedrückt. Sowohl der Zentrierbohrer als auch die Bohrkrone, die wiederum gegenüber einer anderen Feder axial gelagert ist, werden durch die Federkräfte in ihre Ausgangsstellungen zurückbewegt. Die Kernbohrmaschine steht dann für den nächsten Bohrvörgang bereit, ohne dass der vorherige Bohrvorgang unterbrochen werden muss, ohne dass der Zentrierbohrer "weglaufen" kann und ohne dass die verschiedenen Komponenten einem zu hohen Verschleiß ausgesetzt sind.

Sowohl die rotatorische Mitnahme als auch die axiale Verschieblichkeit der Bohrkrone wird z.B. mit Hilfe einer Nut in der Bohrkrone ermöglicht, die sich in der axialen Richtung erstreckt. Die Werkzeugaufnahme der Bohrmaschine weist dazu einen entsprechend ausgelegten Verriegelungsmechanismus auf. Es versteht sich, dass die Bohrkrone auch einen radial nach außen vorstehenden Vorsprung aufweisen kann, der dann mit einer entsprechenden Ausnehmung in der Werkzugaufnahme inkl. einem angepassten Verriegelungsmechanismus korrespondiert.

Ferner ist es bevorzugt, wenn sich das Anschlagselement in der zweiten Stellung befindet, während sich die Bohrkrone in einer axial am Nächsten gelegenen Position relativ zur Hohlbohrwelle befindet.

In dieser Stellung stößt die Bohrkrone insbesondere an die Werkzeugaufnahme an.

Bei einer bevorzugten Ausführungsform ist in der Hohlbohrwelle in einem Bereich, wo die Schiebhülse radial außen auf der Hohlbohrwelle aufsitzt, ein in radialer Richtung verschiebliches Anschlagselement derart gelagert, dass das Anschlagselement in einem entspannten Zustand des zweiten Federelements durch die Schiebhülse radial so in das Innere der Hohlbohrwelle gezwungen wird, dass das Anschlagselement in das Innere vorsteht, und dass sich das Anschlagselement in einem gestauchten Zustand des zweiten Federelements durch den Zentrierbohrer so radial nach außen bewegen lässt, dass der Zentrierbohrer in axialer Richtung über das Anschlagselement hinaus tiefer nach hinten in die Hohlbohrwelle eindringen kann.

Außerdem ist es von Vorteil, wenn ein innerer Hohlraum der Schiebhülse mit zunehmender Länge in axialer Richtung nach vorn einen zunehmenden Radius aufweist, um dem Anschlagselement in radialer Richtung Raum zum Ausweichen vor dem sich in axialer Richtung beweglichen Zentrierbohrer zu geben.

Die Schiebhülse ist also, was ihre innere Kontur betrifft, besonders ausgebildet. Die Kontur ist derart gewählt, dass die Schiebhülse in ihrer Normalstellung, bei der das ihr zugeordnete Federelement nicht gestaucht ist, das Anschlagselement in das Innere der Hohlbohrwelle vorstehen lässt. Ist der Bohrvorgang weit genug fortgeschritten, wie oben beschrieben, wird die Schiebhülse axial nach hinten verschoben. Durch die Kontur wird ein Raum geschaffen, den das Anschlagselement benötigt, um sich aus dem Inneren der Hohlböhrwelle zurückziehen zu können. Dann ist der Weg für den Zentrierbohrer frei, damit sich dieser so weit in die Hohlbohrwelle zurückziehen kann, wie die Kernbohrmaschine beim eigentlichen Bohrvorgang mit der Bohrkrone nach vorne bewegt wird. Die Tiefe des Pilotlochs ändert sich somit nicht. Trotzdem ist jederzeit eine gute Führung bzw. Zentrierung sichergestellt.

Vorzugsweise ist jedes Verbindungselement ein Bolzen, der axial verschieblich innerhalb der Hohlbohrwelle gelagert ist und der zwischen der Schiebhülse und der eingesteckten Bohrkrone angeordnet ist, um die Bohrkrone und die Schiebhülse direkt, oder indirekt über eine oder mehrere Scheiben, zum Zwecke einer axialen Verschiebung der Schiebhülse nach hinten zu koppeln.

Bei einer weiteren besonderen Ausführungsform weist die Werkzeugaufnahme einen vorderen Teil der Hohlbohrwelle, in welchem der Verriegelungsmechanismus angeordnet ist, und eine axial gegen ein drittes Federelement verschieblich gelagerte Spannhülse auf, die sich in einem entspannten Zustand des dritten Federelements im Bereich des Verriegelungsmechanismus in radialer Richtung gegen den vorderen Teil der Hohlbohrwelle abstützt.

Der Verriegelungsmechanismus dient also sowohl zum sicheren Aufnehmen und Freigeben der Bohrkrone als auch zum radialen Führen und Mitnehmen.

Weiterhin ist es von Vorteil, wenn der Verriegelungsmechanismus zumindest ein Rastelelement aufweist, wobei jedes Rastelelement in einem radialen Kanal innerhalb des vorderen Teils der Hohlbohrwelle sitzt, dessen Länge so gewählt ist, dass das Rastelelement in den entspannten Zustand des dritten Federelements durch die sich abstützende Spannhülse radial in das Innere der Hohlbohrwelle vorsteht. Dann greift das Rastelelement derart in die Nut der eingesteckten Bohrkrone ein, dass die Bohrkrone nicht axial aus der Werkzeugaufnahme herausgezogen werden kann.

Bei einer anderen Ausgestaltung ist das erste Federelement zwischen einem hinteren Ende des Inneren der Hohlbohrwelle und dem eingesteckten Zentrierbohrer angeordnet.

Damit ist gewährleistet, dass das erste Federelement den Bohrkern über den Zentrierbohrer auswirft, sobald der Bohrvorgang abgeschlossen ist, das heißt sobald die Bohrkrone das zu bearbeitende Werkstück durchdrungen hat.

Damit wird auch der Rückstellvorgang der verschiedenen beweglichen Komponenten der Kernbohrmaschine eingeleitet.

Bei einer weiteren vorteilhaften Ausgestaltung der Kernbohrmaschine ist das zweite Federelement koaxial auf der Hohlbohrwelle zwischen der Schiebhülse und einem Sicherungselement angeordnet, das drehfest und axial nicht verschieblich außen an der Hohlbohrwelle gelagert ist.

Das zweite Federelement dient zur automatischen Rückstellung der verschieblich gelagerten Schiebhülse in ihre Ausgangsstellung, sobald ein Bohrvorgang abgeschlossen ist.

Bei einer anderen bevorzugten Ausführungsform ragt der Zentrierbohrer, wenn sich alle Federelemente in ihrem entspannten Zustand befinden, vorn in axialer Richtung über die Werkzeugaufnahme und die Bohrkrone im eingesteckten Zustand hinaus.

Somit ist sichergestellt, dass bei einer handgeführten Bedienung der Zentrierbohrer als Positiönierhilfe eingesetzt werden kann, um die Kernbohrmaschine relativ zu dem zu bearbeitenden Werkstück zu positionieren.

Ferner kann die Kernbohrmaschine eine Bohrkrone aufweisen, die Bohrkrone zumindest eine Nut aufweist, in die der Verriegelungsmechanismus im eingesteckten Zustand der Bohrkrone derart eingreift, dass die Bohrkrone bei einer Rotation der Hohlbohrwelle synchron mitdreht und dass die Bohrkrone gleichzeitig in axialer Richtung verschieblich gegenüber der Werkzeugaufnahme gelagert ist.

Vorzugsweise ist eine axiale Länge der Nut (mindestens) so lang gewählt, dass die Bohrkrone während eines Bohrvorgangs die Schiebhülse mittels dem mindestens einen Verbindungselement so weit axial nach hinten schiebt, dass das zweite Federelement derart gestaucht ist, dass die Schiebhülse dem Anschlagselement in radialer Richtung den Raum zum Ausweichen vor dem axial beweglichen Zentrierbohrer gibt.

Außerdem ist es von Vorteil, wenn die Bohrkrone eine Aufnahmehülse, eine Schürze und einen Schneidbecher aufweist, wobei die Nut in der Aufnahmehülse ausgebildet ist, wobei die Schürze in radialer Richtung relativ zur Aufnahmehülse übersteht und wobei eine Länge der Aufnahmehülse so gewählt ist, dass die Schürze an eine vordere Kante der Werkzeugaufnahme anstößt, um eine Vorschubkraft vollständig von der Kernbohrmaschine auf die Bohrkrone zu übertragen.

Die in radialer Richtung gegenüber der Aufnahmehülse vorstehende Schürze dient als Sicherheitsanschlag, der den Verschiebeweg der Bohrkrone, und somit auch den der Schiebhülse, begrenzt. Beschädigungen innerhalb der Kernrohrmaschine, die auftreten könnten, wenn sich die axial verschieblichen Elemente, insbesondere die Schiebhülse, zu weit nach hinten, das heißt in das Innere der Kernbohrmaschine, bewegen würden, sind ausgeschlossen.

Ausführungsbeispiele der Erfindung sind in der Zeichnung dargestellt und werden in der nachfolgenden Beschreibung näher erläutert. Es zeigen:
- Figur 1: eine isolierte seitliche Schnittansicht durch eine erfindungsgemäße Kernbohrmaschine ohne Bohrkrone und Zentrierbohrer;
- Figur 2: eine seitliche Schnittansicht der Kernbohrmaschine der Figur 1 mit einer Bohrkrone und einem Zentrierbohrer in einer Ausgangsstellung;
- Figur 3: die Kernbohrmaschine der Figur 2 nach erfolgter Positionierung an einem zu bearbeitenden Werkstück;
- Figur 4: die Kernbohrmaschine der Figur 3, nachdem ein Pilotloch vorgebohrt ist;
- Figur 5: die Kernbohrmaschine der Figur 4, nachdem das Pilotloch erweitert wurde;
- Figur 6: die Kernbohrmaschine der Figur 5, nachdem die Bohrkrone das zu bearbeitende Werkstück durchdrungen hat;
- Figur 7: die Kernbohrmaschine der Figur 6, wobei ein Bohrkern mittels des sich rückstellenden Zentrierbohrers ausgestoßen wird;
- Figur 8: die Kernbohrmaschine der Figur 7, nachdem sie sich in ihre Normalstellung automatisch zurückgestellt hat;
- Figur 9: eine Schnittansicht entlang einer Linie IX - IX der Figur 1; und
- Figur 10: eine Schnittansicht entlang einer Linie X - X der Figur 1.

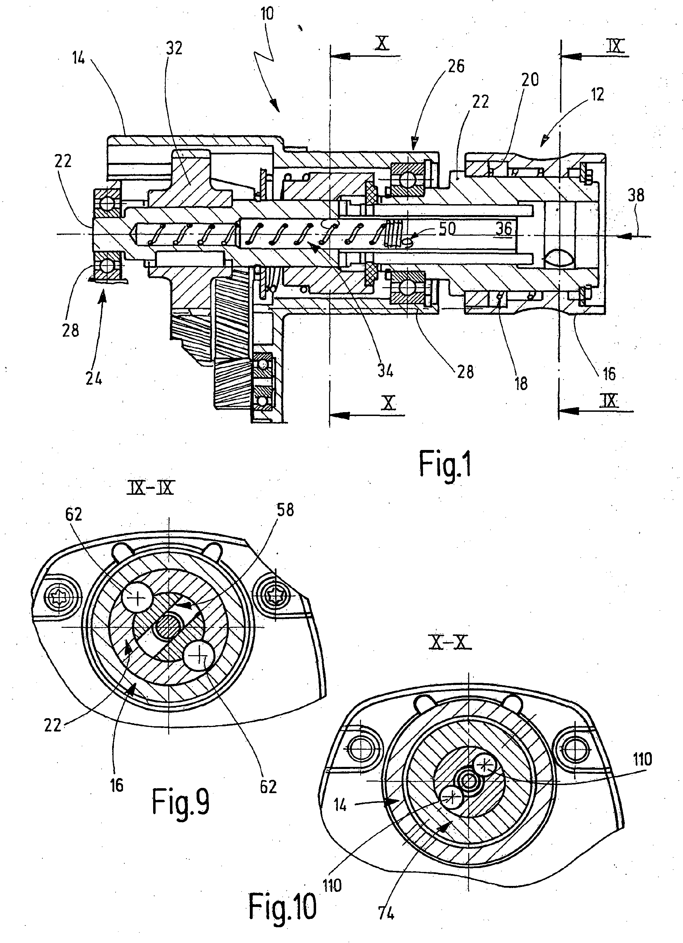

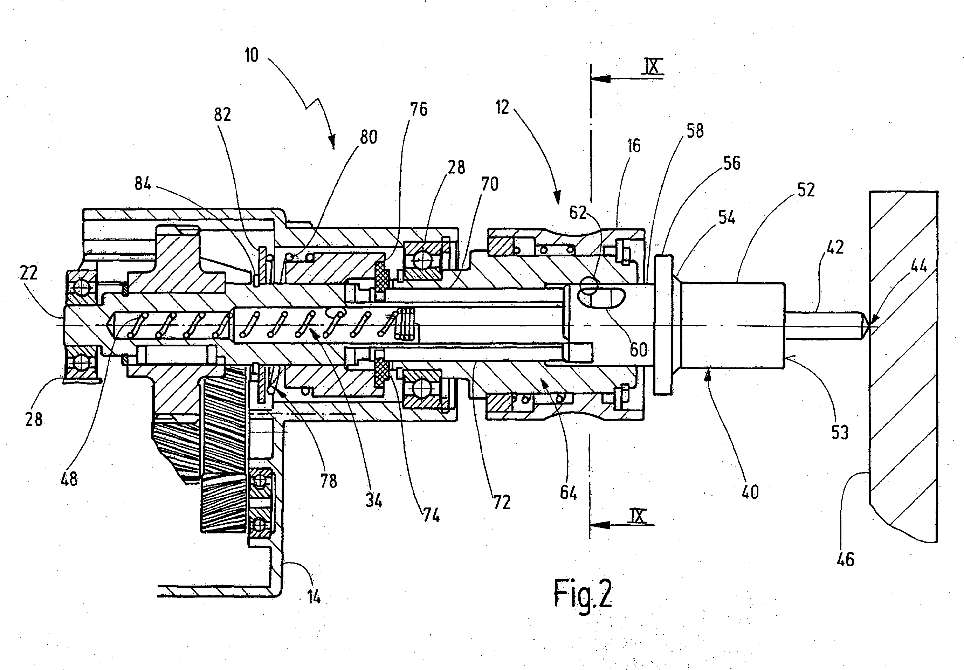

Im Nachfolgenden werden sowohl ein Aufbau als auch eine Funktionsweise einer erfindungsgemäßen Kernbohrmaschine 10 erläutert werden. Die Fig. 1 bis 10 zeigen alle die gleiche Kernbohrmaschine 10. Die Fig. 1 zeigt eine seitliche Schnittansicht durch die isolierte Kernbohrmaschine 10 ohne Bohrkrone und Zentrierbohrer. Die Fig. 2 bis 8 zeigen seitliche Schnittansichten der Kernbohrmaschine 10 mit Bohrkrone und Zentrierbohrer in verschiedenen Sequenzen, die charakteristische Abschnitte eines Bohrvorgangs zeigen. Die Fig. 9 und 10 zeigen Schnittansichten von besonderen axialen Abschnitten des erfindungsgemäßen Gesamtsystems, insbesondere soweit eine axiale Verschiebung von bestimmten Komponenten betroffen ist.

In der Fig. 1 ist die Kernbohrmaschine 10 mit einer Werkzeugaufnahme 12 und einem Gehäuse 14, aber ohne Bohrkrone und Zentrierbohrer, gezeigt. Die Kernbohrmaschine 10 ist nicht vollständig gezeigt, das es auf die restlichen Komponenten, wie zum Beispiel Drehantriebe, Steuerungselektronik, usw. für die vorliegende Erfindung nicht ankommt.

Die Werkzeugaufnahme 12 weist eine Spannhülse 16 auf, die in axialer Richtung mittels eines Federelements 18, hier einer Spiralfeder 20, gegenüber einem vorderen Teil einer Hohlbohrwelle 22 federnd gelagert ist. Die Hohlbohrwelle 22 wird gegenüber dem Gehäuse 14 drehbar mit einem ersten Lager 24 und einem zweiten Lager 26 gelagert. Die Lager 24 und 26 sind hier in Form von Wälzlagern 28 implementiert. Die Hohlbohrwelle 22 erstreckt sich im Wesentlichen axial entlang ihrer Längsachse 30. Die Hohlbohrwelle 22 wird mit einem mittels einer Passfeder gesicherten Antriebsrad 32 in Rotation versetzt.

Ein weiteres Federelement 34, hier ebenfalls in Form einer Spiralfeder 48, ist axial in einem Inneren 36 der Hohlbohrwelle 22 angeordnet und wird mit Hilfe eines Sicherungselements (vergleiche Aussparung 50 zur Aufnahme von zum Beispiel radial vorstehenden Sicherungsstiften) innerhalb der Hohlbohrwelle 22 gehalten. Das weitere Federelement 34 kann bereits vorgespannt sein. Wenn das weitere Federelement 34 vorgespannt ist, kann ein Bohrkern mit einer größeren Kraft ausgestoßen werden.

Eine Bohrkrone wird von vorn in die Werkzeugaufnahme 12 eingeführt, wie es mit einem Pfeil 38 in der Fig. 1 angedeutet ist.

Fig. 2 zeigt die Kernbohrmaschine 10 der Fig. 1 mit einer axial eingesteckten Bohrkrone 40 sowie einem bereits axial eingeführten Zentrierbohrer 42. In der Fig. 2 ist eine Situation dargestellt, bei der mit Hilfe des Zentrierbohrers 42 ein Anrisspunkt 44 auf einem zu bearbeitenden Werkstück 46 angepeilt wird. Dies kann die Bedienperson ohne Probleme manuell erledigen, da die Sicht auf den Anrisspunkt 44 frei ist.

Die Bohrkrone 40 weist in axialer Richtung einen Schneidbecher 52 mit vorderer Schneidkante 53, einen konischen, sich in radialer Richtung verbreiternden Abschnitt 54, eine als Anschlag fungierende Schürze 56 sowie eine Aufnahmehülse 58 auf. Die Aufnahmehülse 58 weist wiederum eine Nut 60 auf, die sich im Wesentlichen in der Längsrichtung 30 erstreckt und die zur Aufnahme eines Rastelements 62 (zum Beispiel einer Kugel) eines hier nicht näher veranschaulichten Verriegelungsmechanismus 61 geeignet ist. Die Kugel 62 begrenzt eine axiale Verschieblichkeit der Bohrkrone 40. Des Weiteren sorgt die (vorstehende) Kugel bei einer Rotation der Hohlbohrwelle 22 dafür, dass sich die Bohrkrone 40 synchron mit der Hohlbohrwelle 22 dreht. Die Kugel 62 ist hier in einem nicht näher dargestellten radialen Kanal in einem vorderen Teil 64 der Hohlbohrwelle 22 angeordnet.

Um die Bohrkrone 40 aus der Werkzeugaufnahme 12 zu lösen, wird die Spannhülse 16 axial nach hinten gegen die Feder 20 bewegt, so dass die Spannhülse 16 die Kugel 62 nicht mehr daran hindert, sich in radialer Richtung nach außen zu bewegen, und so ein Abziehen der Bohrkrone 40 ermöglicht.

Der vordere Teil 64 der Hohlbohrwelle 22 weist ferner in axialer Richtung axiale Durchgänge auf, die zur Aufnahme von mindestens einem Verbindungselement dienen. Im vorliegenden Beispiel sind zwei sich in axialer Richtung erstreckende Bolzen 70 und 72 als Verbindungselemente vorgesehen, um über ein, vorzusweise scheibenförmiges, Übertragungselement 74 eine Schiebhülse 76 axial nach hinten verschieben zu können, wenn die Bohrkrone 40 axial nach hinten gedrückt wird. Die Bolzen 70 und 72 stellen somit eine Wirkverbindung zwischen der Bohrkrone 40 und der Schiebhülse 76 bereit. Die Bolzen 70 und 72 bilden mit der Schiebhülse 70 eine Aktivierungseinrichtung, die in eine ersten und zweiten Position verbracht werden kann.

Die Schiebhülse 76 sitzt axial verschieblich gelagert auf einem äußeren Mantel eines hinteren Teils der Hohlbohrwelle 22 auf. Eine axiale Verschiebung der Schiebhülse 76 erfolgt gegen ein weiteres Federelement 78, das hier ebenfalls in Form einer Spiralfeder 80 implementiert ist. Die Spiralfeder 80 stößt an eine Scheibe 82 an, die hier mit Hilfe eines Sicherungsrings 84 an einer axialen Bewegung nach hinten gehindert wird. Der Sicherungsring 84 ist drehfest zur Hohlbohrwelle 22 angeordnet. Normalerweise drehen die Schiebhülse 76, die Spiralfeder 80 und die Scheiben 74 und 82 synchron mit der Hohlbohrwelle 22 mit, selbst wenn eine axiale Verschiebung der Schiebhülse 76 stattfindet.

Die Hohlbohrwelle 22 ist vorzugsweise einstückig ausgebildet, wobei das Innere 36 so ausgebildet ist, dass der Zentrierbohrer 42 entweder über einen Kraftschluss oder einen Formschluss mit der Hohlbohrwelle 22 rotiert, wenn die Hohlbohrwelle 22 angetrieben wird, das heißt in Rotation versetzt wird.

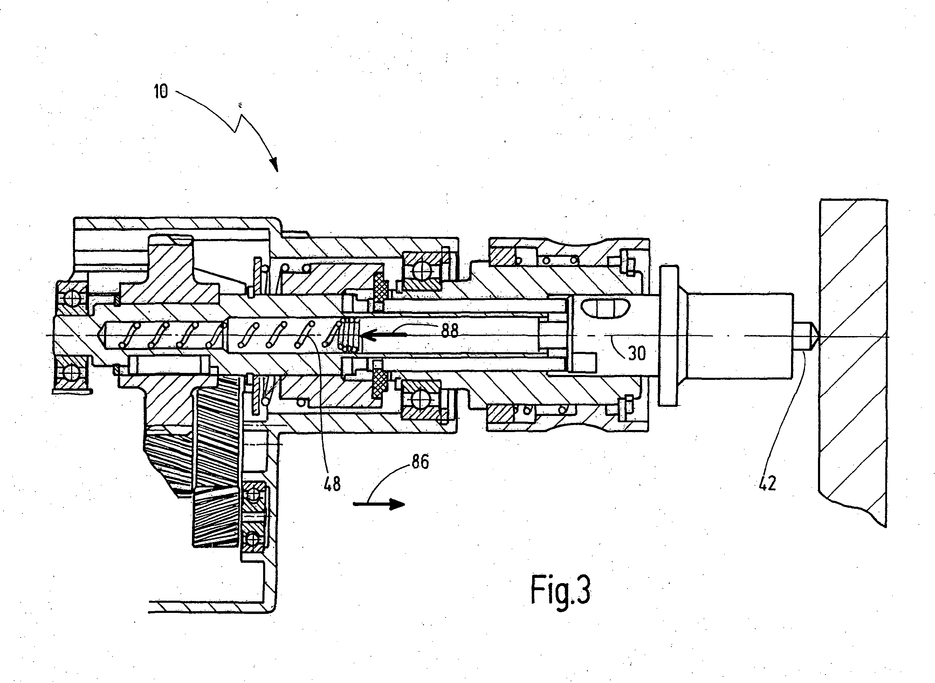

Sobald die Kernbohrmaschine 10 richtig positioniert ist, wie es in Fig. 2 gezeigt ist, kann die Kernbohrmaschine 10 eingeschaltet und von der Bedienperson nach vorn geführt werden, wie es in Fig. 3 mit Hilfe eines Pfeils 86 angedeutet ist. Die Rotation der Hohlbohrwelle 22 ist dabei üblicherweise bereits aktiviert. Durch die Vorwärtsbewegung 86 der Kernbohrmaschine 10 bewegt sich der Zentrierbohrer 42 axial nach hinten im Inneren 36. Der Zentrierbohrer 42 bewegt sich dabei gegen die Feder 48. Der Zentrierbohrer 42 lässt sich so weit nach hinten bewegen, bis er an ein Anschlagselement anstößt, wie es nachfolgend noch genauer erläutert werden wird. Die Relativbewegung des Zentrierbohrers 42 zur Kernbohrmaschine 10 ist mit Hilfe eines Pfeils 88 angedeutet.

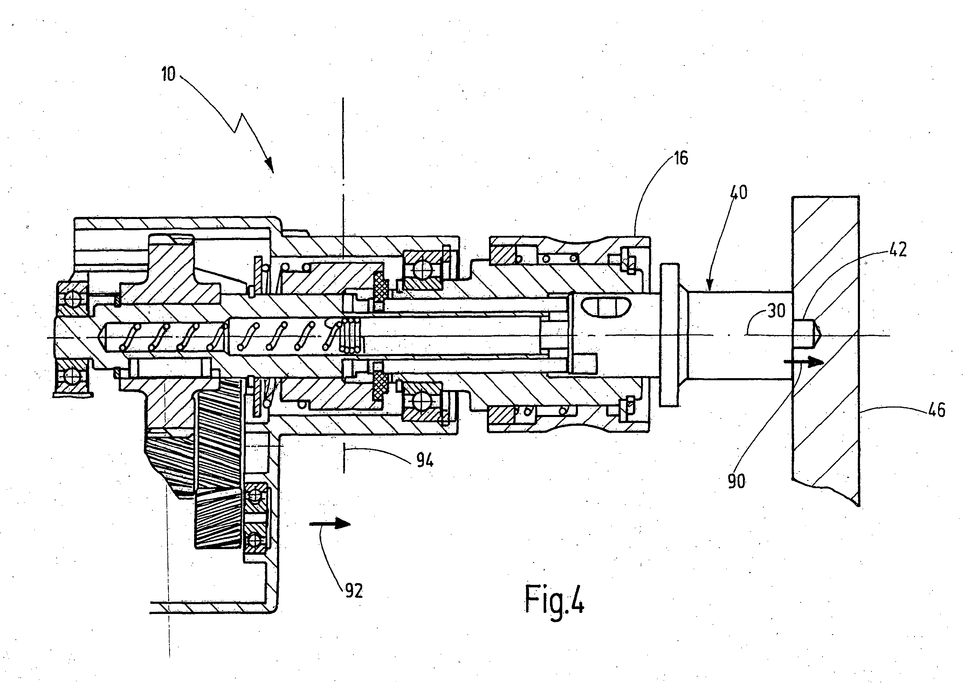

Bezug nehmend auf Fig. 4 ist eine Situation gezeigt, bei der die Kernbohrmaschine 10 im Vergleich zur Fig. 3 noch um ein kleines Stück weiter nach vorn bewegt wurde, wie es durch die Pfeile 90 und 92 in der Fig. 4 angedeutet ist. Die vordere Spitze des Zentrierbohrers 42 dringt dabei mit einer ersten Tiefe in das Werkstück 46 ein und bildet ein Pilotloch. Die Bohrkrone 40 bewegt sich relativ zur Werkzeugaufnahme 12 bzw. den vorderen Teil 64 der Hohlbohrwelle 22 nicht.

Der Zentrierbohrer 42 stützt sich dabei, wie bereits zuvor erwähnt, gegen ein Anschlagselement ab, das nahe einer Hilfslinie 94 angeordnet ist. Die Hilfslinie 94 zeigt den vorderen Rand einer Öffnung, durch die nachfolgend noch zu beschreibende Anschlagselemente treten können.

Bezug nehmend auf Fig. 10 sind zwei Kugeln 110 als Anschlagselemente gezeigt, die im Wesentlichen innerhalb der Hohlbohrwelle 22 in nicht näher bezeichneten radialen Kanälen derart gelagert sind, dass sie in das Innere 36 radial vorstehen (vergleiche auch Fig. 1). Die Kugeln 110 verhindern, dass sich der Zentrierbohrer 42 weiter nach hinten in die Hohlbohrwelle 22 zurückziehen kann. Diese Situation ist in der Fig. 4 (erste Stellung bzw. Position) gezeigt.

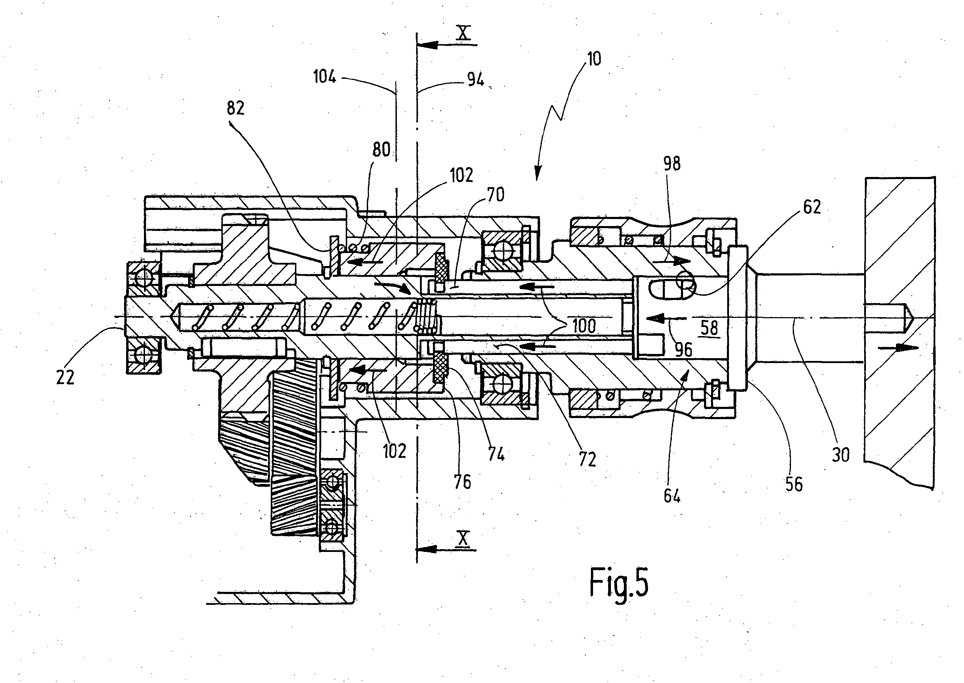

Wird jetzt weiter Druck nach vorne durch die Bedienperson augeübt, so wirkt diese Anpresskraft auf die Bohrkrone 40, die sich, wie in Fig. 5 gezeigt, gegenüber der Werkzeugaufnahme 12 in Richtung eines Pfeils 96 weiter nach hinten zurückzieht. Dabei dringt der Zentrierbohrer 42 noch etwas weiter in das Werkstück 46 ein und vergrößert die Vertiefung des Pilotlochs. Das Pilotloch wird um den Weg tiefer, den die Schürze 56 in Richtung des vorderen Teils 64 der Hohlbohrwelle 22 zurücklegt, bis die Schürze 56 gegen den vorderen Teil 64 anschlägt. Relativ gesehen bewegt sich also der vordere Teil 64 auf die Bohrkrone 40 zu, wie es in Fig. 5 mit einem Pfeil 98 angedeutet ist.

Die Bohrkrone 40 stößt an die Bolzen 70 und 72 und drückt diese, da die Bolzen 70 und 72 axial verschieblich gelagert sind, in der Hohlbohrwelle 22 nach hinten. Diese Verschiebung nach hinten wird über die Scheibe 74 auf die Schiebhülse 76 übertragen, die sich selbst wiederum axial nach hinten bewegt. Dadurch wird die Feder 80 gestaucht. Die besondere Innenkontur der Schiebhülse 76 gibt den Weg für die Anschlagselemente (Kugeln 110, vergleiche Fig. 10) frei. Die Anschlagselemente können sich deshalb radial nach außen bewegen. In der Fig. 5 ist dies bei einem Pfeil 106 angedeutet, wo man eine Austrittsöffnung für die Kugeln 110 in der Hohlbohrwelle 22 erkennen kann.

Die axiale Verschiebung der Schiebhülse 76 nach hinten ist mit Hilfe eines Pfeils 102 angedeutet. Die axiale Verschiebung wird auch deutlich, wenn man die weitere Hilfslinie 104 betrachtet, die den Versatz des radial engeren Innenteils gegenüber der Stellung der Fig. 4 verdeutlicht (vgl. Hilfslinie 94). Da die Kugeln 110 nun radial nach außen beweglich sind, kann der Zentrierbohrer 42 tiefer ins Innere 36 der Hohlbohrwelle 22 zurückgeschoben werden (zweite Stellung bzw. Position), wenn die Kernbohrmaschine 10 weiter nach vorne bewegt wird.

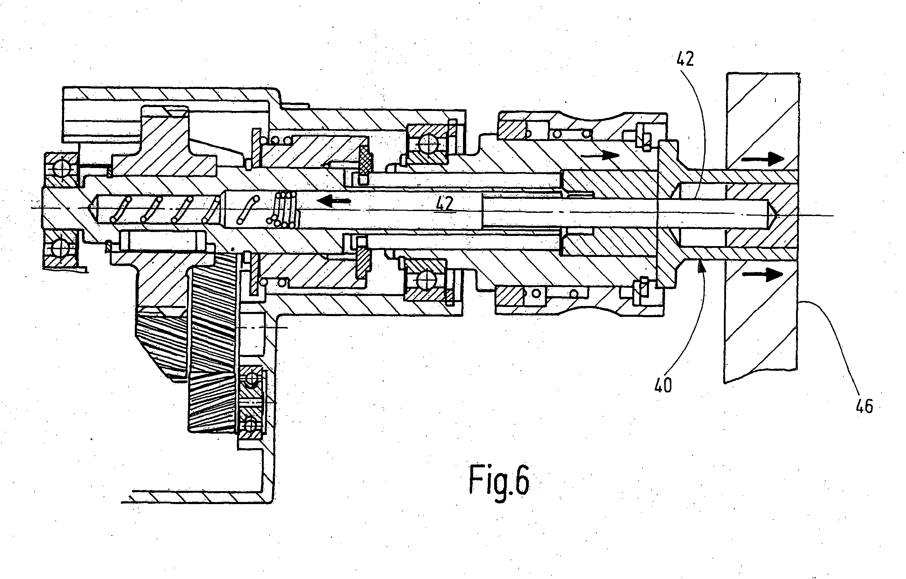

Dies ist in der Fig. 6 gezeigt (zweite Stellung bzw. Position). Der Zentrierbohrer 42 verbleibt im Wesentlichen an Ort und Stelle in Bezug auf das zu bearbeitende Werkstück 46. Die Bohrkrone 40 dringt in das Werkstück 46 ein und durchdringt es.

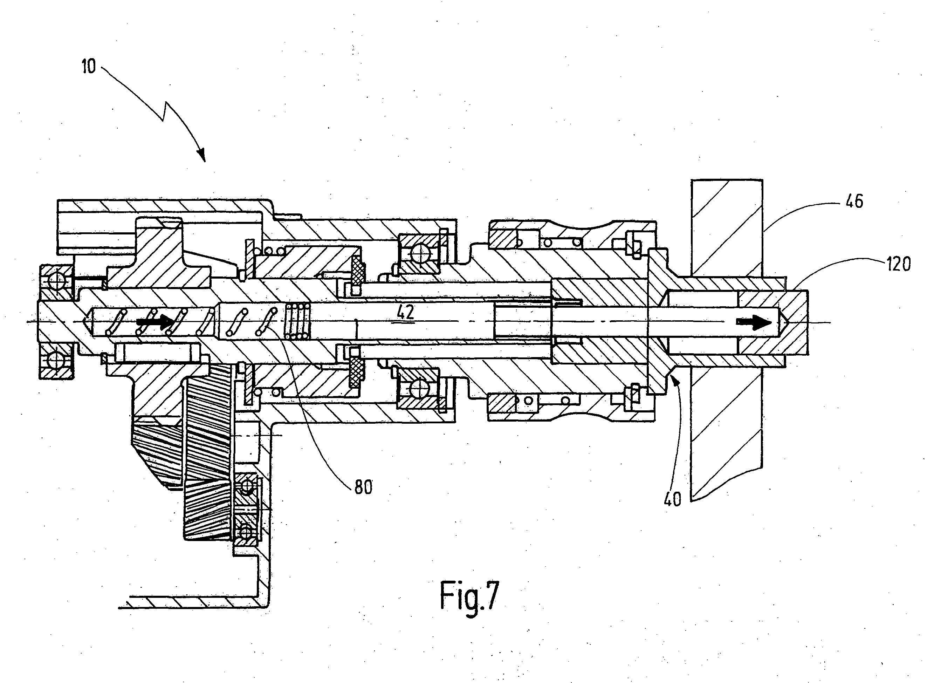

In der Fig. 7 wurde die Kernbohrmaschine 10 noch weiter in Richtung des Werkstücks 46 bewegt, so dass die Bohrkrone 40 das Werkstück 46 vollständig durchdrungen hat. Damit ist ein Bohrkern 120 nicht mehr fest mit dem Werkstück 46 verbunden. Die in der Feder 80 gespeicherte Energie reicht aus, um den Zentrierbohrer 42 inklusive dem Bohrkern 120 nach vorn zu bewegen, wie es in der Fig. 7 mit zwei dunklen Pfeilen angedeutet ist.

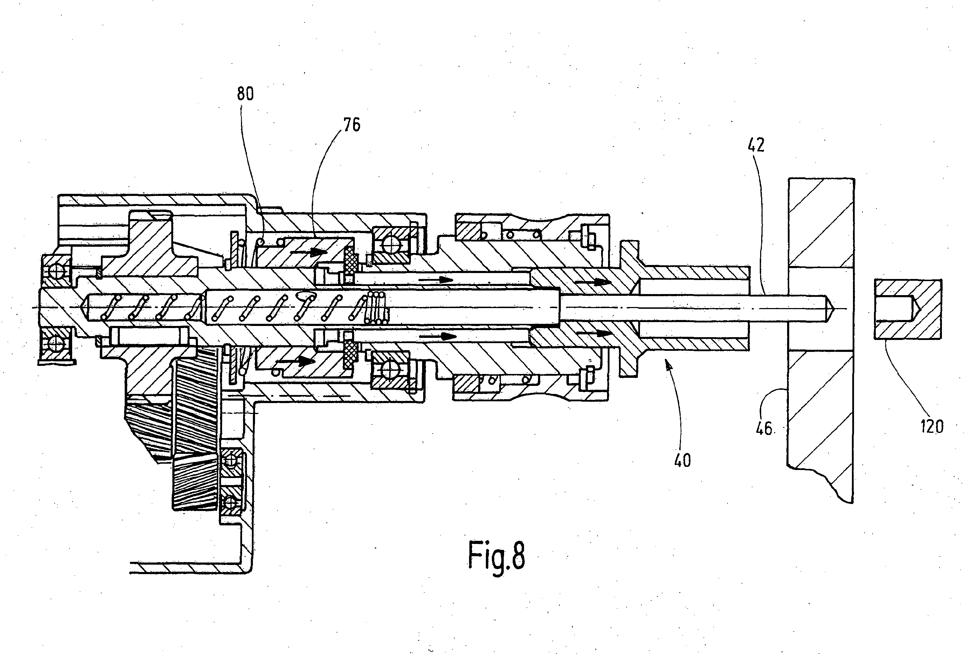

Anschließend wird die Kernbohrmaschine 10 wieder aus dem Werkstück 46 zurückgezogen, wie es in Fig. 8 gezeigt ist. Sobald der Druck auf die Bohrkrone 40 wegfällt, wird aufgrund der in der Feder 80 gespeicherten Energie die Schiebhülse 46 nach vorn bewegt. Dadurch bewegen sich die Bolzen 70, 72 nach vorn und schieben die Bohrkrone 40 damit nach außen. Die Kernbohrmaschine 10 befindet sich dann wieder in ihrer Ausgangsstellung, ähnlich wie in Fig. 2 gezeigt.

Es versteht sich, dass die Federelemente in der Fig. 2 nicht vollständig entspannt sein müssen, d.h auch unter einer Vorspannung stehen können. Die Federelemente der Fig. 2 sind in diesem Sinne in ihren "entspannen" Zuständen gezeigt.

Bezug nehmend auf Fig. 9 ist eine Schnittansicht entlang einer Linie IX - IX der Fig. 1 gezeigt.

In der Fig. 9 sind die Rastelelemente des Verriegelungsmechanismus 61 näher gezeigt. Die Rastelelemente sind hier in Form von Kugeln 62 implementiert, die in nicht näher gezeigten radialen Kanälen im vorderen Teil 64 der Hohlbohrwelle 22 vorgesehen sind.

Die Kugeln 62 wirken mit den axialen Nuten 60 zusammen. Eine Länge der axialen Nut 60 in der Aufnahmehülse 58 bedingt die axiale Verschiebung der Bohrkrone 40 nach hinten, wie es durch einen Vergleich der Fig. 2 und 5 deutlich wird, wo die Kugeln 62 in Form dunkler Kreise angedeutet sind.

Es versteht sich, dass die oben beschriebene Erfindung auch in Form eines Aufsatzes realisiert werden kann, der auf eine gewöhnliche Bohrmaschine mit einem z.B. Dreibackenfutter aufgesteckt wird. Die gewöhnliche Bohrmaschine stellt dann den Antrieb dar. Der Aufsatz umfasst unter Anderem die Hohlbohrwelle, die Werkzeugaufnahme und die Aktivierungseinrichtung. Auf diese Weise lässt sich ebenfalls eine erfindungsgemäße Kernbohrmaschine realisieren. Der Aufsatz fällt unter den Anspruch 1.

## Patentansprüche

1. Kernbohrmaschine (10) mit:
einer sich axial erstreckenden Hohlbohrwelle (22), die drehbar in einem Gehäuse (14) der Kernbohrmaschine (10) gelagert ist und die mit einer Antriebseinheit in Rotation versetzt werden kann;
einer koaxialen Werkzeugaufnahme (12) zur Aufnahme einer axial verschieblich lagerbaren Bohrkrone (40), wobei die Werkzeugaufnahme (12) einen Verriegelungsmechanismus (61) aufweist, der die Bohrkrone (40), wenn sie in die Werkzeugaufnahme (12) eingesteckt ist, in einer radialen Richtung gegen ein axiales Herausfallen sichert, wobei der Verriegelungsmechanismus (61) die Bohrkrone (40) drehfest mit der Hohlbohrwelle (22) verbindet und eine begrenzte axiale Bewegung (96) der Bohrkrone (40) relativ zur Hohlbohrwelle (22) ermöglicht;
wobei die Hohlbohrwelle (22) geeignet ist, in ihrem Inneren (36) vorn einen Schaft eines austauschbaren Zentrierbohrers (42) aufzunehmen, wobei der Zentrierbohrer (42) drehfest mit der Hohlbohrwelle (22) koppelbar ist, sich axial begrenzbar in der Hohlwelle (22) bewegen kann und sich axial gegen ein erstes Federelement (34) abstützt; und
einem axialen Anschlagselement (110) für den Zentrierbohrer (42), das in einer ersten Stellung eine vollständige Verschiebung des Zentrierbohrers (42) in das Innere (36) der Hohlbohrwelle (22) verhindert und das in einer zweiten Stellung eine vollständige Verschiebung des Zentrierbohrers (42) in das Innere (36) der Hohlbohrwelle (22) zulässt; und
einer Aktivierungseinrichtung (76, 70, 72) zur Aktivierung der ersten oder der zweiten Stellung des Anschlagelements (110) in Abhängigkeit von einer axialen Position der Bohrkrone (40) relativ zur Hohlbohrwelle (22).

2. Kernbohrmaschine (10) nach Anspruch 1, wobei sich das Anschlagselement in der zweiten Stellung befindet, wenn sich die Bohrkrone (40) in einer axial am Nächsten gelegenen Position relativ zur Hohlbohrwelle (22) befindet.

3. Kernbohrmaschine nach Anspruch 1 oder 2, wobei die Aktivierungseinrichtung eine Schiebhülse (76) aufweist, die koaxial zur Hohlbohrwelle (22) angeordnet ist, wobei die Schiebhülse (76) gegen ein zweites Federelement (78) axial verschieblich auf der Hohlbohrwelle (22) gelagert ist und über zumindest ein sich axial erstreckendes Verbindungselement an die austauschbare Bohrkrone (40) koppelbar ist.

4. Kernbohrmaschine nach Anspruch 3, wobei in der Hohlbohrwelle (22) in einem Bereich, wo die Schiebhülse (76) radial außen auf der Hohlbohrwelle (22) aufsitzt, das Anschlagselement (110) derart radial verschieblich gelagert ist, dass das Anschlagselement (110) in einem entspannten Zustand des zweiten Federelements (78) durch die Schiebhülse (76) radial so in das Innere (36) der Hohlbohrwelle (22) gezwungen wird, dass das Anschlagselement (110) in das Innere (36) vorsteht, und dass sich das Anschlagselement (110) in einem gestauchten Zustand des zweiten Federelements (78) durch den Zentrierbohrer (42) so radial nach außen bewegen lässt, dass der Zentrierbohrer (42) in axialer Richtung über das Anschlagselement (110) hinaus tiefer nach hinten in die Hohlbohrwelle (22) eindringen kann.

5. Kernbohrmaschine nach Anspruch 4, wobei ein innerer Hohlraum der Schiebhülse (76) mit zunehmender Länge in axialer Richtung (30) nach vorn einen zunehmenden Radius aufweist, um dem Anschlagselement (110) in radialer Richtung Raum zum Ausweichen vor dem sich in axialer Richtung (30) beweglichen Zentrierbohrer (42) zu geben.

6. Kernbohrmaschine einem der vorhergehenden Ansprüche, wobei jedes Verbindungselement ein Bolzen (70, 72) ist, der axial verschieblich innerhalb der Hohlbohrwelle (22) gelagert ist und der zwischen der Schiebhülse (76) und der eingesteckten Bohrkrone (40) angeordnet ist, um die Bohrkrone (40) und die Schiebhülse (76) direkt, oder indirekt über eine oder mehrere Scheiben, zum Zwecke einer axialen Verschiebung der Schiebhülse (76) nach hinten zu koppeln.

7. Kernbohrmaschine nach einem der vorhergehenden Ansprüche, wobei die Werkzeugaufnahme (12) einen vorderen Teil (64) der Hohlbohrwelle (22), in welchem der Verriegelungsmechanismus (61) angeordnet ist, und eine axial gegen ein drittes Federelement (18) verschieblich gelagerte Spannhülse (16) aufweist, die sich in einem entspannten Zustand des dritten Federelements (18) im Bereich des Verriegelungsmechanismus (61) in radialer Richtung gegen den vorderen Teil (64) der Hohlbohrwelle (22) abstützt.

8. Kernbohrmaschine nach Anspruch 7, wobei der Verriegelungsmechanismus (61) zumindest ein Rastelement (62) aufweist, wobei jedes Rastelement (62) in einem radialen Kanal innerhalb des vorderen Teils (64) der Hohlbohrwelle (22) sitzt, dessen Länge so gewählt ist, dass das Rastelement (62) in dem entspannten Zustand des dritten Federelements (18) durch die sich abstützende Spannhülse (16) radial in das Innere (36) der Hohlbohrwelle (22) vorsteht, so dass das Rastelement (62) derart in die Nut (60) der eingesteckten Bohrkrone (40) eingreift, dass die Bohrkrone (40) nicht axial aus der Werkzeugaufnahme (12) heraus gezogen werden kann.

9. Kernbohrmaschine nach einem der vorhergehenden Ansprüche, wobei das erste Federelement (34) zwischen einem hinteren Ende des Inneren (36) der Hohlbohrwelle (22) und dem eingesteckten Zentrierbohrer (42) angeordnet ist.

10. Kernbohrmaschine nach einem der vorhergehenden Ansprüche, wobei das zweite Federelement (78) koaxial auf der Hohlbohrwelle (22) zwischen der Schiebhülse (76) und einem Sicherungselement (84) angeordnet ist, das drehfest und axial nicht verschieblich außen an der Hohlbohrwelle (22) gelagert ist.

11. Kernbohrmaschine nach einem der vorhergehenden Ansprüche, wobei der Zentrierbohrer (42), wenn sich alle Federelemente (18, 34, 78) in ihrem entspannten Zustand befinden, vorn in axialer Richtung (30) über die Werkzeugaufnahme (12) und die Bohrkrone (40) im eingesteckten Zustand hinausragt.

12. Kernbohrmaschine nach einem der vorhergehenden Ansprüche mit einer Bohrkrone (40) zum Einstecken in die Kernbohrmaschine (10), wobei die Bohrkrone (40) zumindest eine Nut (60) aufweist, in die der Verriegelungsmechanismus (61) im eingesteckten Zustand der Bohrkrone (40) derart eingreift, dass die Bohrkrone bei einer Rotation der Hohlbohrwelle (22) synchron mit dreht und dass die Bohrkrone (40) gleichzeitig in axialer Richtung (30) verschieblich gegenüber der Werkzeugaufnahme (12) gelagert ist.

13. Kernbohrmaschine nach Anspruch 12, wobei eine axiale Länge der Nut (60) mindestens so lang gewählt ist, dass die Bohrkrone (40) während eines Bohrvorgangs die Schiebhülse (76) mittels dem mindestens einen Verbindungselement so weit axial nach hinten schiebt, dass das zweite Federelement (78) derart gestaucht ist, dass die Schiebhülse (76) dem Anschlagselement (110) in radialer Richtung den Raum zum Ausweichen vor dem Zentrierbohrer (42) gibt.

14. Kernbohrmaschine nach einem der Ansprüche 12 oder 13, wobei die Bohrkrone (40) eine Aufnahmehülse (58), eine Schürze (56) und einen Schneidbecher (52) aufweist, wobei die Nut (60) in der Aufnahmehülse (58) ausgebildet ist, wobei die Schürze (56) in radialer Richtung relativ zur Aufnahmehülse (58) übersteht, um einen Sicherheitsanschlag zu bilden, und wobei eine Länge der Aufnahmehülse (58) so gewählt ist, dass die Schürze (56) an eine vordere Kante der Werkzeugaufnahme (12) anschlägt, bevor die Hohlbohrwelle (22) durch Überstauchung des zweiten Federelements (78) beschädigt wird.

15. Kernbohrmaschine nach einem der vorhergehenden Ansprüche mit einem Zentrierbohrer (42) mit einem Schaft, der eine axiale Länge aufweist, die dazu geeignet ist, mit der Kernbohrmaschine und mit der Bohrkrone nach einem der Ansprüche 12 bis 14 wechselzuwirken

## Claims

1. A core drilling machine (10) comprising:
an axially extending hollow drilling shaft (22) which is supported rotatably in a housing (14) of the core drilling machine (10) and which can be rotated by a driving unit;
a coaxial tool holder (12) for holding a drill bit (40) which can be supported axially displaceable, wherein the tool holder (12) comprises a locking mechanism (61) securing the drill bit (40), if inserted into the tool holder (12), in a radial direction against axially falling out, wherein the locking mechanism (61) connects the drill bit (40) in a rotationally fixed manner to the hollow drilling shaft (22) and allows an axially limited movement (96) of the drill bit (40) relative to the hollow drilling shaft (22);
wherein the hollow drilling shaft (22) is configured to receive, in an interior (36) thereof, a shaft of an exchangeable centering drill (42) at the front, wherein the centering drill (42) can be coupled rotationally fixed to the hollow drilling shaft (22), can be moved in an axially limited manner within the hollow shaft (22), and is axially supported against a first spring element (34); and
an axial stopping element (110) of the centering drill (42), which axial stopping element (110) prevents, in a first position, a complete displacement of the centering drill (42) into the interior (36) of the hollow drilling shaft (22) and allows, in a second position, a complete displacement of the centering drill (42) into the interior (36) of the hollow drilling shaft (22); and
an activating device (76, 70, 72) for activating the first position or the second position of the stopping element (110) dependent on an axial position of the drill bit (40) relative to the hollow drilling shaft (22).

2. The core drilling machine (10) of claim 1, wherein the stopping element is located in the second position if the drill bit (40) is in a position, which is axially the closest, relative to the hollow drilling shaft (22).

3. The core drilling machine of claim 1 or 2, wherein the activating device comprises a push sleeve (76) being arranged coaxially to the hollow drilling shaft (22), wherein the push sleeve (76) is supported on the hollow drilling shaft (22) against a second spring element (78) in an axially displaceable manner and can be coupled via at least one axially extending connecting element to the exchangeable drill bit (40).

4. The core drilling machine of claim 3, wherein the stopping element (110) is supported in the hollow drilling shaft (22) in a region where the push sleeve (76) sits radially on the outside of the hollow drilling shaft (22), the stopping element (110) being radially displaceable such that the stopping element (110) is urged, in a relaxed state of the second spring element (78), by the push sleeve (76) radially into the interior (36) of the hollow drilling shaft (22) such that the stopping element (110) protrudes into the interior (36), and that the stopping element (110) is movable in a compressed state of the second spring element (78) by the centering drill (42) radially outwardly so that the centering drill (42) can penetrate in the axial direction deeper backwards into the hollow drilling shaft (22) across the stopping element (110).

5. The core drilling machine of claim 4, wherein an inner hollow space of the push sleeve (76) comprises an increasing radius when the length increases towards the front in the axial direction (30), in order to provide space for the stopping element (110) in the radial direction for avoiding the centering drill (42) which is movable in the axial direction (30).

6. The core drilling machine of one of the preceding claims, wherein each of the connecting elements is a pin (70, 72) which is supported in an axially displaceable manner within the hollow drilling shaft (22) and which is arranged between the push sleeve (76) and the inserted drill bit (40) for coupling the drill bit (40) and the push sleeve (76) directly, or indirectly via one or more washers, for the purpose of axially displacing the push sleeve (76) to the back.

7. The core drilling machine of one of the preceding claims, wherein the tool holder (12) comprises a front part of the hollow drilling shaft (22), in which the locking mechanism (61) is arranged, and a clamp sleeve (16), which is supported axially displaceable against a third spring element (18) and which is supported in a relaxed state of the third spring element (18) in a region of the locking mechanism (61) in a radial direction against the front part (64) of the hollow drilling shaft (22).

8. The core drilling machine of claim 7, wherein the locking mechanism (61) comprises at least one latching element (62), wherein each of the latching elements (62) sits in a radial channel within the front part (64) of the hollow drilling shaft (22), a length of the radial channel being selected such that the latching element (62) protrudes in a relaxed state of the third spring element (18) through the clamp sleeve (16), which is supported, radially into the interior (36) of the hollow drilling shaft (22) such that the latching element (62) engages the groove (60) of the inserted drill bit (40) such that the drill bit (40) cannot be withdrawn axially from the tool holder (12).

9. The core drilling machine of one of the preceding claims, wherein the first spring element (34) is arranged between a rear end of the interior (36) of the hollow drilling shaft (22) and the inserted centering drill (42).

10. The core drilling machine of one of the preceding claims, wherein the second spring element (78) is arranged coaxially on the hollow drilling shaft (22) between the push sleeve (76) and a securing element (84), which is supported rotationally fixed and axially non-displaceable on the outside of the hollow drill shaft (22).

11. The core drilling machine of one of the preceding claims, wherein the centering drill (42), if each of the spring elements (18, 34, 78) is in a relaxed state thereof, protrudes at the front in an axial direction (30) across the tool holder (12) and the drill bit (40) in an inserted state.

12. The core drilling machine of one of the preceding claims having a drill bit (40) for inserting into the core drilling machine (10), wherein the drill bit (40) comprises at least one groove (60) into which the locking mechanism (61) engages in an inserted state of the drill bit (40) such that the drill bit rotates synchronously with a rotation of the hollow drilling shaft (22) and that the drill bit (40) is simultaneously supported displaceable in an axial direction (30) relative to the tool holder (12).

13. The core drilling machine of claim 12, wherein an axial length of the groove (60) is selected at least so long that the drill bit (40) pushes during a drilling process the push sleeve (76) by means of the at least one connecting element so far axially to the back that the second spring element (78) is compressed such that the push sleeve (76) provides the space for the stopping element (110) in the radial direction for avoiding the centering drill (42).

14. The core drilling machine of one of claims 12 or 13, wherein the drill bit (40) comprises a receiving sleeve (78), a skirting (56), and a cutting cup (52), wherein the groove (60) is formed in the receiving sleeve (58), wherein the skirting (56) protrudes in the radial direction relative to the receiving sleeve (58) for forming the securing stop, and wherein a length of the receiving sleeve (58) is selected such that the skirting (56) abuts to a front edge of the tool holder (12) before the hollow drilling shaft (22) is damaged due to an over-compression of the second spring element (78).

15. The core drilling machine of one of the preceding claims having a centering drill (42) including a shaft which comprises an axial length being adapted to interact with the core drilling machine and with the drill bit of one of the claims 12 to 14.

## Revendications

1. Carottière (10) comprenant :
un arbre de forage creux (22) s'étendant axialement, lequel est monté de manière rotative dans un boîtier (14) de la carottière (10) et lequel peut être mis en rotation à l'aide d'une unité d'entrainement ;
un logement d'outil coaxial (12) destiné à recevoir une couronne de forage (40) pouvant être montée de manière déplaçable axialement, le logement d'outil (12) comprenant un mécanisme de verrouillage (61) qui bloque la couronne de forage (40), lorsqu'elle est insérée dans le logement d'outil (12), dans une direction radiale de manière à l'empêcher de sortir axialement, le mécanisme de verrouillage (61) reliant de manière solidaire en rotation la couronne de forage (40) à l'arbre de forage creux (22) et permettant un déplacement axial limité (96) de la couronne de forage (40) par rapport à l'arbre de forage creux (22) ;
l'arbre de forage creux (22) étant approprié pour recevoir dans son intérieur (36) à l'avant une tige d'un foret de centrage échangeable (42), le foret de centrage (42) pouvant être accouplé de manière solidaire en rotation à l'arbre de forage creux (22), pouvant se déplacer de manière limitable axialement dans l'arbre creux (22) et s'appuyant axialement contre un premier élément de ressort (34) ; et
un élément de butée axial (110) pour le foret de centrage (42), lequel élément de butée empêche, dans une première position, un déplacement complet du foret de centrage (42) dans l'intérieur (36) de l'arbre de forage creux (22) et lequel élément de butée autorise, dans une deuxième position, un déplacement complet du foret de centrage (42) dans l'intérieur (36) de l'arbre de forage creux (22) ; et
un dispositif d'activation (76, 70, 72) pour l'activation de la première ou de la deuxième position de l'élément de butée (110) en fonction d'une position axiale de la couronne de forage (40) par rapport à l'arbre de forage creux (22).

2. Carottière (10) selon la revendication 1, dans laquelle l'élément de butée se trouve dans la deuxième position lorsque la couronne de forage (40) se trouve dans une position située le plus près axialement par rapport à l'arbre de forage creux (22).

3. Carottière selon la revendication 1 ou 2, dans laquelle le dispositif d'activation comprend un manchon coulissant (76) qui est disposé de manière coaxiale par rapport à l'arbre de forage creux (22), le manchon coulissant (76) étant monté de manière déplaçable axialement sur l'arbre de forage creux (22) contre un deuxième élément de ressort (78) et pouvant être accouplé à la couronne de forage échangeable (40) par le biais d'au moins un élément de liaison s'étendant axialement.

4. Carottière selon la revendication 3, dans laquelle, dans l'arbre de forage creux (22), dans une région où le manchon coulissant (76) repose radialement à l'extérieur sur l'arbre de forage creux (22), l'élément de butée (110) est monté de manière déplaçable radialement de telle sorte que l'élément de butée (110) soit, dans un état détendu du deuxième élément de ressort (78), forcé à travers le manchon coulissant (76) radialement dans l'intérieur (36) de l'arbre de forage creux (22) de telle sorte que l'élément de butée (110) fasse saillie dans l'intérieur (36), et de telle sorte que l'élément de butée (110) puisse, dans un état comprimé du deuxième élément de ressort (78), se déplacer à travers le foret de centrage (42) radialement vers l'extérieur de telle sorte que le foret de centrage (42) puisse pénétrer dans la direction axiale au-delà de l'élément de butée (110) plus profondément vers l'arrière dans l'arbre de forage creux (22).

5. Carottière selon la revendication 4, dans laquelle un espace creux intérieur du manchon coulissant (76) présente un rayon augmentant au fur et à mesure que la longueur dans la direction axiale (30) vers l'avant augmente, afin de donner à l'élément de butée (110) dans la direction radiale de l'espace pour éviter le foret de centrage (42) mobile dans la direction axiale (30).

6. Carottière selon l'une quelconque des revendications précédentes, dans laquelle chaque élément de liaison est une goupille (70, 72) qui est montée de manière déplaçable axialement à l'intérieur de l'arbre de forage creux (22) et qui est disposée entre le manchon coulissant (76) et la couronne de forage insérée (40), afin d'accoupler la couronne de forage (40) et le manchon coulissant (76) directement, ou indirectement par le biais d'un ou plusieurs disques, en vue d'un déplacement axial du manchon coulissant (76) vers l'arrière.

7. Carottière selon l'une quelconque des revendications précédentes, dans laquelle le logement d'outil (12) comprend une partie avant (64) de l'arbre de forage creux (22), dans laquelle le mécanisme de verrouillage (61) est disposé, et un manchon de serrage (16) monté de manière déplaçable axialement contre un troisième élément de ressort (18), lequel manchon de serrage, dans un état détendu du troisième élément de ressort (18), s'appuie contre la partie avant (64) de l'arbre de forage creux (22) dans la direction radiale dans la région du mécanisme de verrouillage (61).

8. Carottière selon la revendication 7, dans laquelle le mécanisme de verrouillage (61) comprend au moins un élément d'encliquetage (62), chaque élément d'encliquetage (62) reposant dans un canal radial à l'intérieur de la partie avant (64) de l'arbre de forage creux (22), dont la longueur est sélectionnée de telle sorte que l'élément d'encliquetage (62), dans l'état détendu du troisième élément de ressort (18), fasse saillie radialement dans l'intérieur (36) de l'arbre de forage creux (22) à travers le manchon de serrage (16) en appui, de telle sorte que l'élément d'encliquetage (62) vienne en prise dans la rainure (60) de la couronne de forage insérée (40) de telle sorte que la couronne de forage (40) ne puisse pas être retirée axialement hors du logement d'outil (12).

9. Carottière selon l'une quelconque des revendications précédentes, dans laquelle le premier élément de ressort (34) est disposé entre une extrémité arrière de l'intérieur (36) de l'arbre de forage creux (22) et le foret de centrage inséré (42).

10. Carottière selon l'une quelconque des revendications précédentes, dans laquelle le deuxième élément de ressort (78) est disposé de manière coaxiale sur l'arbre de forage creux (22) entre le manchon coulissant (76) et un élément de fixation (84) qui est monté à l'extérieur sur l'arbre de forage creux (22) de manière solidaire en rotation et non déplaçable axialement.

11. Carottière selon l'une quelconque des revendications précédentes, dans laquelle, lorsque tous les éléments de ressort (18, 34, 78) se trouvent dans leur état détendu, le foret de centrage (42) dépasse à l'avant dans la direction axiale (30) au-delà du logement d'outil (12) et de la couronne de forage (40) dans l'état inséré.

12. Carottière selon l'une quelconque des revendications précédentes, comprenant une couronne de forage (40) destinée à être insérée dans la carottière (10), la couronne de forage (40) comprenant au moins une rainure (60) dans laquelle vient en prise le mécanisme de verrouillage (61) dans l'état inséré de la couronne de forage (40), de telle sorte que, lors d'une rotation de l'arbre de forage creux (22), la couronne de forage tourne conjointement de manière synchrone et de telle sorte que la couronne de forage (40) soit simultanément montée de manière déplaçable dans la direction axiale (30) par rapport au logement d'outil (12).

13. Carottière selon la revendication 12, dans laquelle une longueur axiale de la rainure (60) est sélectionnée de manière à être au moins suffisamment longue pour que, pendant une opération de forage, la couronne de forage (40) pousse le manchon coulissant (76) au moyen de l'au moins un élément de liaison suffisamment loin axialement vers l'arrière pour que le deuxième élément de ressort (78) soit comprimé de telle sorte que le manchon coulissant (76) donne à l'élément de butée (110) dans la direction radiale l'espace pour éviter le foret de centrage (42).

14. Carottière selon l'une quelconque des revendications 12 ou 13, dans laquelle la couronne de forage (40) comprend un manchon de réception (58), une jupe (56) et un godet de coupe (52), dans laquelle la rainure (60) est réalisée dans le manchon de réception (58), dans laquelle la jupe (56) fait saillie dans la direction radiale par rapport au manchon de réception (58), afin de former une butée de sécurité, et dans laquelle une longueur du manchon de réception (58) est sélectionnée de telle sorte que la jupe (56) vienne en butée contre un bord avant du logement d'outil (12) avant que l'arbre de forage creux (22) ne soit endommagé par une surcompression du deuxième élément de ressort (78).

15. Carottière selon l'une quelconque des revendications précédentes, comprenant un foret de centrage (42) pourvu d'une tige qui présente une longueur axiale qui est appropriée pour interagir avec la carottière et avec la couronne de forage selon l'une quelconque des revendications 12 à 14.
